# EUROPEAN PATENT SPECIFICATION

(11) **EP 2 414 196 B1**
(45) Date of publication and mention of the grant of the patent: **30.01.2013**
(21) Application number: 10713035.3
(22) Date of filing: 31.03.2010
(51) Int. Cl.: B60R 11/00, B60R 11/02, B62H 3/02, F16B 2/10, B62J 11/00

(54) **NAVIGATION SYSTEM FOR USE IN A VEHICLE**
NAVIGATIONSSYSTEM ZUR VERWENDUNG IN EINEM FAHRZEUG
SYSTEME DE NAVIGATION DESTINE A ETRE UTILISE DANS UN VEHICULE

(30) Priority: 31.03.2009 NL 2002690
(43) Date of publication of application: 08.02.2012
(73) Proprietor: Khatchatrian, Amaiak, 5071 GS Udenhout (NL)
(72) Inventor: Khatchatrian, Amaiak, 5071 GS Udenhout (NL)
(74) Representative: Verhees, Godefridus Josephus Maria
(86) International application number: PCT/NL2010/050163
(87) International publication number: WO 2010/114370

(56) References cited:
- EP-A1- 0 904 984
- WO-A2-2009/147514
- DE-A1-102007 051 330
- DE-U- 29 901 251
- DE-U1- 20 120 011
- DE-U1- 29 911 574
- GB-A- 2 029 490
- JP-A- 2 120 151
- US-A- 4 842 174
- US-A- 5 988 572
- US-A1- 2008 128 571
- US-A1- 2008 179 478
- US-B1- 6 418 010

## Description

### Field of the invention.

The invention relates to a navigation system for use in a vehicle, comprising a navigation apparatus as well as coupling means for coupling the navigation apparatus to the vehicle, which coupling means comprise holding means to which the navigation apparatus is connected, as well as securing means for securing the holding means to the vehicle, which securing means are arranged as clamping means having two clamping surfaces spaced from each other and facing each other for clamping the holding element to a part of the dashboard of the vehicle. By arranging the securing means as clamping means, the navigation system can be clamped to for example a projecting edge of the dashboard of a motor car. The clamping force may then be such that the navigation system will not loosen from the dashboard in the event of vibration. In addition, the navigation system can be clamped to the dashboard at the place where it does not obstruct the driver's visibility.

### State of the art.

A navigation system of this type is known from US 6 418 010 B1. The securing means of this known navigation system are also arranged as clamping means having two clamping surfaces spaced from each other and facing each other for clamping the holding element to a part of the dashboard of the vehicle. The clamping means comprise two clamping elements being fixed on two arms. These arms are each pivotably connected to an intermediate arm, the length of which can be adjusted. By pivoting the arms with respect to the intermediate arm the clamping surfaces turn away from each other, which makes it difficult to clamp a part of the dashboard in a sturdy manner.

### Summary of the invention.

It is an object of the invention to provide a navigation system of the type defined in the opening paragraph, which is sturdier and can be secured in a different manner than the known system. For this purpose the navigation system according to the invention is characterized in that the clamping means comprise at least one clamping element on which one of the clamping surfaces is located and which is pivotable near the middle around a pivot pin. As a result, the clamping surfaces can be brought into contact with the dashboard over their entire surface due to which the navigation system can be clamped better to the dashboard and causes less chance of the dashboard being damaged.

The clamping means may comprise a C-shaped resilient element which is clamped to a projecting edge of the dashboard. A preferred embodiment of the navigation system according to the invention is characterized, however, in that the clamping means additionally comprise displacement means for moving the clamping surfaces towards each other or away from each other.

For bringing the navigation system to the right position and at the right location on the dashboard after the clamping means have been secured to the dashboard, the holding means preferably comprise a holding element as well as an elongated flexible element connected thereto with a first extremity, the second extremity of which flexible element being detachably connected to the clamping element. As a consequence of the latter characteristic feature the flexible element can be removed in a simple manner if the navigation system is not used.

A further embodiment of the navigation system according to the invention is characterised in that the clamping means comprise two arms hingeably connected to each other by a first extremity, the clamping element being pivotably connected to the other, second extremity of one of the arms. As a result, the clamping surfaces can even be better fixed to an edge of the dashboard.

The displacement means preferably comprise an auxiliary element which projects with a first extremity through a hole in one of the arms and with the other, its second extremity is connected to the other arm, as well as a lever of which one extremity is eccentrically and pivotably connected to the first extremity of the auxiliary element. In consequence, a simple movement will suffice to generate a large clamping force.

Still a further embodiment of the navigation system according to the invention is characterized in that the holding element comprises a carrier which is connected to the first extremity of the flexible element, which carrier comprises a mounting plate which has holes and slots for mounting a navigation apparatus or a holder for a navigation apparatus. As a result, almost any navigation apparatus and any existing holder can be fixed to the holding element with bolts or screws in a simple manner.

### Brief description of the drawings.

The invention will now be described in more detail based on examples of embodiment of the navigation system while reference is made to the appended drawing figures, in which:
Fig. 1 gives a diagrammatic representation a first embodiment of the navigation system fixed to a dashboard;
Fig. 2 shows the securing means of the navigation system represented in a diagrammatic manner in Fig. 1; and
Fig. 3 shows a second embodiment of the navigation system according to the invention.

### Detailed description of the drawings.

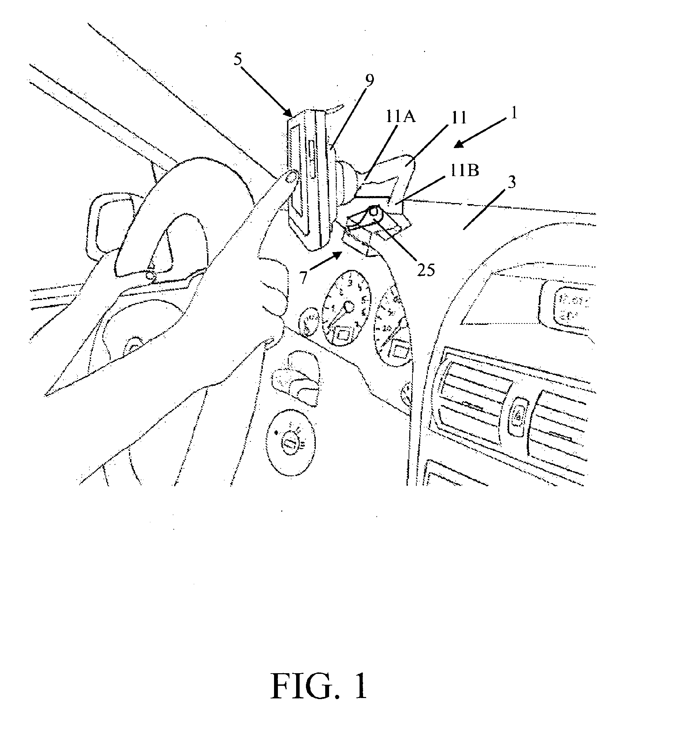

Fig. 1 gives a diagrammatic representation of a first embodiment of the navigation system according to the invention fixed to a dashboard 3 of a motor car. The navigation system 1 comprises a navigation apparatus 5 and coupling means for fixing the navigation apparatus to the dashboard 3. The coupling means are formed by hooding means and clamping means 7. These holding means are formed by a mounting plate 9 and a connected, elongated flexible element 11 formed like a snake which can be bent to any desired position and stays in that position when let loose. The mounting plate is connected to a first extremity 11A of the flexible element, and the other, second extremity 11B of the flexible element is connected to the clamping means 7.

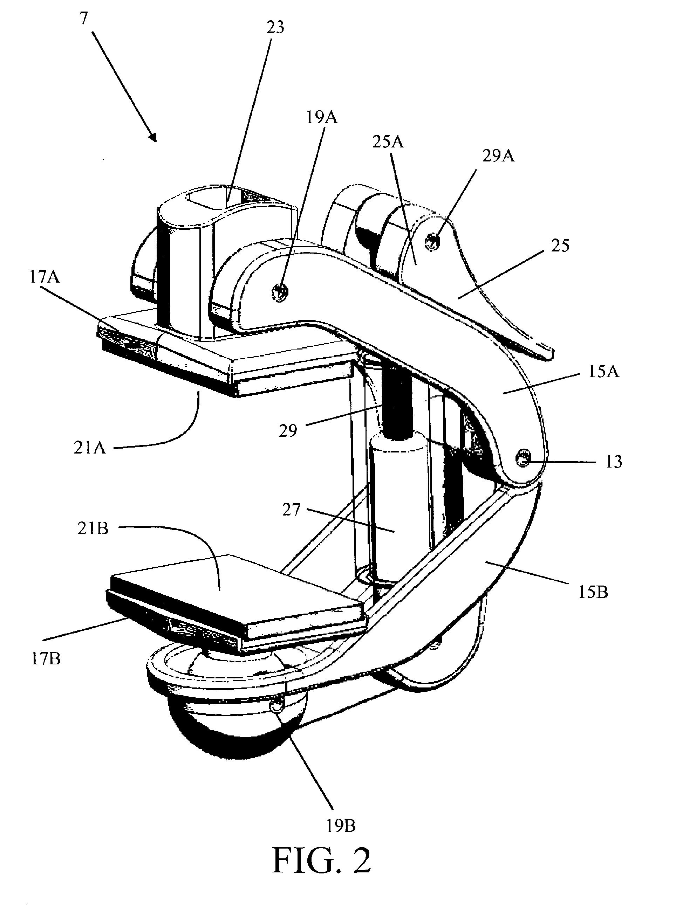

Fig. 2 gives a detailed representation of the clamping means 7 of the navigation system 1. The clamping means have two arms 15A and 15B connected to each other by means of a first extremity hingeable around a pivot pin 13. The other, second extermities of the arms are provided with clamping elements 17A and 17B. These clamping elements are formed by clamping plates which are hingeingly connected to the arms by means of hingeing shafts 19A and 19B near the middle. The clamping plates are provided with clamping surfaces 21A and 21B which are facing each other.

The flexible element 11 can be coupled to the clamping element 17B by means of the second extremity 11B. For this purpose the clamping element has a recess 23.

The clamping means further comprise displacement means for moving the clamping elements towards each other or away from each other. These displacement elements are formed by an auxiliary element and a pivotable lever 25 connected thereto. The auxiliary element is formed by a cylinder 27 accommodating a piston 29 moveable therein and a pressure spring pushing the piston outwards. An extremity of the piston 29 projects through an opening in the arm and the cylinder is connected to the arm. The lever 25 is positioned at the end of the piston 29, an extremity 25A of the lever 25 being pivotably connected to the piston. This extremity of the lever is eccentrically arranged on a pivot pin 29A.

The mounting plate 9 has holes and slots for mounting the navigation apparatus or a holder for the navigation apparatus.

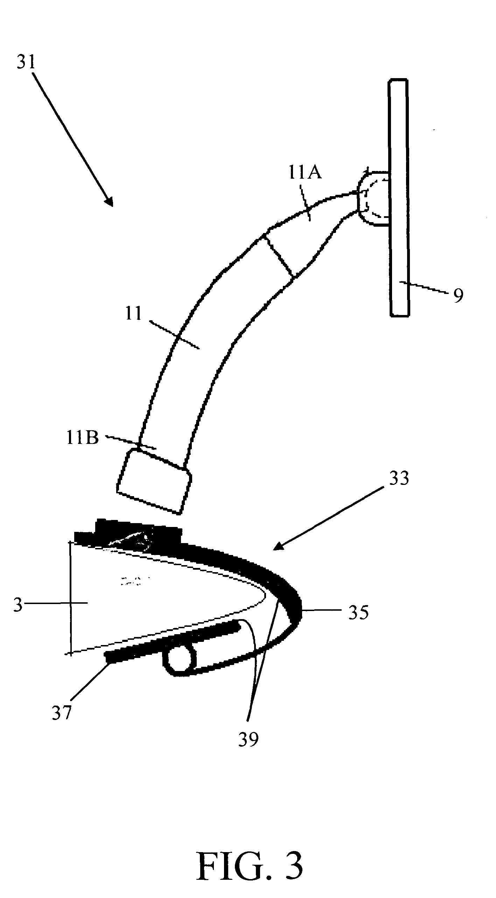

In the second embodiment of the navigation system 31 according to the invention shown in Fig. 3 the clamping means 33 are formed by a U-shaped bracket 35 whose legs can resiliently be bent away from each other. A clamping element 37 is hingeably connected to the extremity of one of the legs. The sides of the clamping element 37 and of the bracket 35 facing each other form the clamping surfaces 39 and are provided with double-sided tape.

Albeit the invention has been described in the foregoing with reference to the drawings, it should be observed that the invention is not by any manner or means restricted to the embodiment shown in the drawings. The invention also extends to all embodiments deviating from the embodiments shown in the drawings within the scope defined by the claims.

## Claims

1. A navigation system (1;31) for use in a vehicle, comprising a navigation apparatus (5) as well as coupling means for coupling the navigation apparatus to the vehicle, which coupling means comprise holding means to which the navigation apparatus is connected, as well as securing means for securing the holding means to the vehicle, which securing means are arranged as clamping means (7;33) having two clamping surfaces (21A,21B;39) spaced from each other and facing each other for clamping the holding element to a part of the dashboard of the vehicle, **characterised in that** the clamping means (7;33) comprise at least one clamping element (17A,17B;37) on which one of the clamping surfaces (21A,21B;39) is located and which is pivotable near the middle around a pivot shaft (19A,19B).

2. A navigation system (1) as claimed in claim 1, **characterised in that** the clamping means (7;33) additionally comprise displacement means for moving the clamping surfaces (21A,21B;39) towards each other or away from each other.

3. A navigation system (1;31) as claimed in claim 1 or 2, **characterised in that** the holding means comprise a holding element as well as an elongated flexible element (11) connected thereto with a first extremity (11A), the second extremity (11B) of which flexible element being detachably connected to the clamping element (17A;37).

4. A navigation system (1) as claimed in claim 1, 2 or 3, **characterised in that** the clamping means comprise two arms (15A,15B) hingeably connected to each other by a first extremity, the clamping element (17A,17B) being pivotably connected to the other, second extremity of one of the arms (15A,15B).

5. A navigation system (1) as claimed in claim 1, 2, 3 or 4, **characterised in that** the displacement means comprise an auxiliary element (27,29) which projects with a first extremity through a hole in one of the arms (15A) and with the other, its second extremity is connected to the other arm (15B), the clamping means being present at the first extremity.

6. A navigation system (1;31) as claimed in claim 3, or claims 4 or 5 when dependent on claim 3, **characterised in that** the holding element comprises a carrier which is connected to the first extremity of the flexible element, 11 which carrier comprises a mounting plate (9) which has holes and slots for mounting a navigation apparatus or a holder for a navigation apparatus.

## Patentansprüche

1. Navigationssystem (1; 31) zur Anwendung in einem Fahrzeug, enthaltend ein Navigationsgerät (5) sowie Kupplungselemente zum Ankuppeln des Navigationsgeräts am Fahrzeug, welche Kupplungselemente mit dem Navigationsgerät verbundene Befestigungsmittel enthalten sowie Verriegelungselemente zum Verriegeln des Befestigungselements am Fahrzeug, welche Verriegelungselemente als Klemmmittel (7; 33) ausgeführt sind, ausgerüstet mit zwei im Abstand voneinander angeordneten und aufeinander zugerichteten Klemmflächen (21A, 21B; 39) zum Festklemmen des Befestigungselements an einem Teil des Armaturenbretts am Fahrzeug, **dadurch gekennzeichnet, dass** die Klemmmittel (7; 33) mindestens ein Klemmelement (17A, 17B; 37) enthalten, an dem sich eine der Klemmflächen (21A,21B;39) befindet und nahe der Mitte um eine Drehachse (19A, 19B) drehbar ist.

2. Navigationssystem (1) gemäß Anspruch 1, **dadurch gekennzeichnet, dass** die Klemmmittel (7; 33) ferner Verstellelemente enthalten für das aufeinander zu und das voneinander ab verstellen der Klemmflächen (21A, 21B; 39).

3. Navigationssystem (1; 31) gemäß Anspruch 1 oder 2, **dadurch gekennzeichnet, dass** die Befestigungsmittel ein Befestigungselement enthalten sowie ein damit am einen Ende (11A) verbundenen lang gestreckten, flexiblen Element (11), das am anderen Ende (11B) abnehmbar mit dem Klemmelement (17A; 37) verbunden ist.

4. Navigationssystem (1) gemäß Anspruch 1, 2 oder 3, **dadurch gekennzeichnet, dass** die Klemmmittel zwei am einen Ende drehbar miteinander verbundene Arme (15A, 15B) enthalten, wobei das Klemmelement (17A, 17B) drehbar mit dem anderen, zweiten Ende eines der Arme (15A, 15B) verbunden ist.

5. Navigationssystem (1) gemäß Anspruch 1, 2, 3 oder 4, **dadurch gekennzeichnet, dass** die Verstellelemente durch ein Hilfselement (27, 29) gebildet werden, das mit dem einen Ende in einem Loch in einem der Arme (15A) steckt und mit dem anderen, zweiten Ende mit dem anderen Arm (15B) verbunden ist, wobei sich die Klemmmittel am ersten Ende befinden.

6. Navigationssystem (1;31) gemäß Anspruch 3 oder Anspruch 4 oder 5, sofern abhängig von Anspruch 3, **dadurch gekennzeichnet, dass** das Befestigungselement einen Träger enthält, der mit dem einen Ende des flexiblen Elements (11) verbunden ist und welcher Träger eine Montageplatte (9) enthält, versehen mit Löchern und Nuten zur Montage eines Navigationsgeräts oder eines Halters für ein Navigationsgerät.

## Revendications

1. Système de navigation (1;31) pour l'utilisation dans un véhicule, comprenant un appareil de navigation (5) ainsi que des moyens de raccordement pour raccorder l'appareil de navigation au véhicule, lesquels moyens de raccordement comprennent des moyens de maintien auxquels est relié l'appareil de navigation, ainsi que des moyens de fixation, pour fixer l'élément de maintien au véhicule, lesquels moyens de fixation sont réalisés par des moyens de serrage (7;33) pourvus de deux plans de serrage (21A,21B;39) situés à distance l'un de l'autre et orientés l'un vers l'autre pour accrocher par serrage l'élément de maintien sur une partie du tableau de bord du véhicule, **caractérisé en ce que** les moyens de serrage (7;33) comprennent au moins un élément de serrage (17A,17B;37) sur lequel se trouve l'un des plans de serrage (21A,21B;39) et qui est pivotant environ en son milieu autour d'un axe de rotation (19A,19B).

2. Système de navigation (1) selon la revendication 1, **caractérisé en ce que** les moyens de serrage (7;33) comprennent de plus des moyens de déplacement pour rapprocher les plans de serrage (21A,21B;39) l'un vers l'autre et les éloigner l'un de l'autre.

3. Système de navigation (1;31) selon la revendication 1 ou 2, **caractérisé en ce que** les moyens de maintien comprennent un élément de maintien ainsi qu'un élément flexible allongé (11) relié à celui-ci par une première extrémité (11A) et dont la deuxième extrémité (11B) est reliée de façon amovible à l'élément de serrage (17A;37).

4. Système de navigation (1) selon la revendication 1, 2 ou 3, **caractérisé en ce que** les moyens de serrage comprennent deux bras (15A,15B) reliés de façon articulable l'un à l'autre par une première extrémité, où l'élément de serrage (17A,17B) est relié de façon pivotante à la deuxième extrémité de l'un des bras (15A,15B).

5. Système de navigation (1) selon la revendication 1, 2, 3 ou 4, **caractérisé en ce que** les moyens de déplacement sont formés d'un outil d'aide (27,29), qui en sa première extrémité se loge dans un trou fait dans l'un des bras (15A), et en sa deuxième extrémité est relié à l'autre bras (15B), où les moyens de serrage se trouvent sur la première extrémité.

6. Système de navigation (1;31) selon la revendication 3, ou selon les revendications 4 ou 5 si elles dépendent de la revendication 3, **caractérisé en ce que** l'élément de maintien comprend un support relié à la première extrémité de l'élément flexible (11), lequel support comprend une plaque de montage (9) pourvue de trous et de rainures pour le montage d'un appareil de navigation ou d'un boîtier d'appareil de navigation.
